# EUROPÄISCHE PATENTSCHRIFT

(11) **EP 2 098 275 B1**
(45) Veröffentlichungstag und Bekanntmachung des Hinweises auf die Patenterteilung: **25.04.2012**
(21) Anmeldenummer: 08450151.9
(22) Anmeldetag: 06.10.2008
(51) Int. Cl.: B01D 46/44, B01D 46/00, B01D 46/12

(54) **Filter**
Filter
Filtre

(30) Priorität: 25.02.2008 AT 3102008
(43) Veröffentlichungstag der Anmeldung: 09.09.2009
(73) Patentinhaber: Maké, Charlotte, 9800 Spittal/Drau (AT); Maké, Martin, 9800 Spittal/Drau (AT); Maké, Walter, 9800 Spittal/Drau (AT)
(72) Erfinder: Maké, Charlotte, 9800 Spittal/Drau (AT); Maké, Martin, 9800 Spittal/Drau (AT); Maké, Walter, 9800 Spittal/Drau (AT)
(74) Vertreter: Beer, Manfred

(56) Entgegenhaltungen:
- EP-A- 1 571 024
- DE-U1- 7 902 819
- DE-U1- 29 622 912
- US-A1- 2006 156 927

## Beschreibung

Die Erfindung betrifft ein Filter mit den Merkmalen des einleitenden Teils von Anspruch 1.

Aus der EP 1 571 024 A1 ist ein Filter bekannt, das zum Reinigen von mit Schadstoffen beladener Luft bestimmt ist. Dabei werden Schadstoffe in einem Schadstoffilter zurückgehalten, das in einem eine Lufteintrittsöffnung für die zu reinigende Atmosphärenluft und eine Luftaustrittsöffnung für die gereinigte Atmosphärenluft aufweisenden Filtersystem angeordnet ist. Zum Erzeugen einer Luftströmung durch den wenigstens einen Schadstofffilter wird die Lufteintrittsöffnung des Filtersystems quer zu einem Atmosphärenluftstrom ausgerichtet wird, wobei der Atmosphärenluftstrom ein natürlicher Luftstrom oder ein durch Bewegen des Filtersystems erzeugter Gegenluftstrom ist.

Weitere Filtersysteme mit Kombinationen aus mehreren Filtern sind aus DE 79 02 819 U, DE 29 622 912 U und US 2006/156927 A bekannt.

Der Erfindung liegt die Aufgabe zugrunde, ein Filter anzugeben, das auf Fahrzeugen angeordnet werden kann und das, insbesondere während der Bewegung eines Fahrzeuges, in der Lage ist, Staub, insbesondere Feinstaub, aus der Luft wirksam zu filtern.

Gelöst wird diese Aufgabe erfindungsgemäß mit einem Filter, das die Merkmale von Anspruch 1 aufweist.

Bevorzugte und vorteilhafte Ausgestaltungen des erfindungsgemäßen Filters sind Gegenstand der Unteransprüche.

Da das erfindungsgemäße Filter nicht nur mehrere Filterlagen, sondern auch einen wirksamen Schutz gegen Eintritt von Wasser in das Filter gewährleistet, ist es ohne weiteres und insbesondere ohne die Wirksamkeit und Funktion des Filters zu beeinträchtigen möglich, dieses an Fahrzeugen anzubringen.

In Betracht gezogen sind alle Fahrzeuge, ganz gleich, ob es sich um Landfahrzeuge, wie Straßenfahrzeuge und Schienenfahrzeuge, Luftfahrzeuge oder Wasserfahrzeuge handelt.

Bevorzugt ist es, wenn das erfindungsgemäße Filter an der Stirnfläche oder im Bereich der Stirnfläche eines Fahrzeuges angeordnet wird.

Im Rahmen der Erfindung besteht auch die Möglichkeit, den zum Kühlen des Antriebsmotors dienende Luftstrom vor oder nach dem Durchtritt durch den Kühler des Antriebsmotors der Eingangsseite des erfindungsgemäßen Filters zuzuführen.

Ganz besonders bevorzugt ist die Anordnung des erfindungsgemäßen Filters oberhalb der Front- oder Windschutzscheibe von Fahrzeugen. Bei dieser Anordnung kann die eintrittseitige, also nach vorne weisende Begrenzungswand des Filters nach Art eines Luftleitbleches ("Spoiler") schräg gestellt angeordnet sein.

Auch der Einbau des Filters an der Unterseite eines Fahrzeuges, z.B. mit im Bereich einer Stoßstange liegender Eintrittsöffnung, ist in Betracht gezogen.

Da beim erfindungsgemäßen Filter an dessen Vorderseite und an dessen Rückseite (der bezogen auf die Fahrtrichtung nach vorne weisenden Endfläche und der bezogen auf die Fahrrichtung nach hinten weisenden Endfläche des Filters) Begrenzungswände vorgesehen sind, die dazu eingerichtet und ausgebildet sind, dass sie den Eintritt bzw. den Austritt von Luft erlauben, aber der Eintritt von Wasser in das Filter bis zu den Filterlagen verhindert ist, wird wirksam erreicht, dass die Filterlagen des Filters nicht nass werden und deren Filterwirkung, insbesondere beim Herausfiltern von Feinstaub, nicht beeinträchtigt wird.

Bei dem Filter der Erfindung ist vorgesehen, dass vor der ersten Filterlage ein Träger mit an ihm verschwenkbar montierten Klappen angeordnet ist. Weiters zwischen dem Träger und der Wand nach dem Vorfilter ein Kanal für das Ableiten von in das Filter eingetretenem Wasser vorgesehen ist. Bei der Erfindung ist weiters vorgesehen, dass dem Kanal ein Feuchtigkeitssensor zugeordnet ist. Die Klappen an dem Träger sind wirkmäßig vom Feuchtigkeitssensor derart gesteuert, dass die Klappen geschlossen sind, wenn der Feuchtigkeitssensor im Kanal Feuchtigkeit feststellt. So wird zuverlässig verhindert, dass Wasser weiter in das Innere des Filters eindringen kann. Gemäß der Erfindung zeichnet sich das erfindungsgemäße Filter dadurch aus, dass im Anschluss an das Vorfilter eine Wand mit Löchern und Leitflächen, z.B. ein Lochblech, angeordnet ist. Dabei ist gemäß der Erfindung vorgesehen, dass die Leitflächen bezogen auf die Strömungsrichtung von Luft durch das Filter schräg nach unten weisend ausgerichtet sind.

In einer bevorzugten Ausführungsform des erfindungsgemäßen Filters sind zwischen Filterlagen von Einbauten freie Räume vorgesehen, die es erlauben, dass sich allenfalls durch Filterlagen getretener Staub dort sammelt und sich, gegebenenfalls unter Bilden eines Feinstaubkuchens, absetzt, und, soferne der Staub feucht war, dort getrocknet wird, so dass das Filtern begünstigt wird.

Die gelochten Wände an den Endflächen des Filters, die den Eintritt von Wasser verhindern, sind beispielsweise Streckgitter mit schräg zu ihrer Flächenerstreckung ausgerichteten Teilen und/oder Lochbleche mit an ihnen angebrachten, insbesondere nach innen weisenden Leitflächen, die zur Flächenerstreckung der Wand schräg gestellt sind.

In einer möglichen, und im Rahmen der Erfindung in Betracht gezogenen Ausführungsform zeichnet sich das erfindungsgemäße Filter dadurch aus, dass die eintrittseitige Begrenzungswand, z.B. ein Lochblech oder Streckgitter, an ihrer dem Inneren des Filters zugekehrten Seite schräg gestellte Leitflächen trägt.

In einer möglichen, und im Rahmen der Erfindung in Betracht gezogenen Ausführungsform zeichnet sich das erfindungsgemäße Filter dadurch aus, dass Leitflächen mit unterschiedlicher Länge, nämliche kürzere Leitflächen und längere Leitflächen vorgesehen sind.

In einer möglichen, und im Rahmen der Erfindung in Betracht gezogenen Ausführungsform zeichnet sich das erfindungsgemäße Filter dadurch aus, dass die Leitflächen bezogen auf die Strömungsrichtung von Luft durch das Filter schräg nach oben ansteigend ausgerichtet sind.

In einer möglichen, und im Rahmen der Erfindung in Betracht gezogenen Ausführungsform zeichnet sich das erfindungsgemäße Filter dadurch aus, dass das Vorfilter ein auswaschbarer organischer oder mineralischer Faserstoff ist.

In einer möglichen, und im Rahmen der Erfindung in Betracht gezogenen Ausführungsform zeichnet sich das erfindungsgemäße Filter dadurch aus, dass die, vorzugsweise im Anschluss an die Klappen angeordnete Filterlage ein Grobstaubfilter ist.

In einer möglichen, und im Rahmen der Erfindung in Betracht gezogenen Ausführungsform zeichnet sich das erfindungsgemäße Filter dadurch aus, dass nacheinander zwei Feinstaubfilter vorgesehen sind.

In einer möglichen, und im Rahmen der Erfindung in Betracht gezogenen Ausführungsform zeichnet sich das erfindungsgemäße Filter dadurch aus, dass zwischen dem ersten Feinstaubfilter und dem Grobstaubfilter ein Freiraum vorgesehen ist.

In einer möglichen, und im Rahmen der Erfindung in Betracht gezogenen Ausführungsform zeichnet sich das erfindungsgemäße Filter dadurch aus, dass zwischen den Feinstaubfiltern ein Freiraum vorgesehen ist.

In einer möglichen, und im Rahmen der Erfindung in Betracht gezogenen Ausführungsform zeichnet sich das erfindungsgemäße Filter dadurch aus, dass von der ausströmseitigen Begrenzungswand Leitflächen nach außen abstehend vorgesehen sind.

In einer möglichen, und im Rahmen der Erfindung in Betracht gezogenen Ausführungsform zeichnet sich das erfindungsgemäße Filter dadurch aus, dass die Leitflächen der ausströmseitigen Begrenzungswand, z.B. des Lochblechs, bezogen auf die Strömungsrichtung von Luft durch das Filter schräg nach unten abfallend ausgerichtet sind.

In einer möglichen, und im Rahmen der Erfindung in Betracht gezogenen Ausführungsform zeichnet sich das erfindungsgemäße Filter dadurch aus, dass die freien Enden der Leitflächen am ausströmseitigen Lochblech nach unten abgewinkelt sind.

In einer möglichen, und im Rahmen der Erfindung in Betracht gezogenen Ausführungsform zeichnet sich das erfindungsgemäße Filter dadurch aus, dass die einzelnen Bauteile des Filters selbsttragende Bauteile sind, die in einem Gehäuse einzeln eingesetzt und entnehmbar sind.

In einer möglichen, und im Rahmen der Erfindung in Betracht gezogenen Ausführungsform zeichnet sich das erfindungsgemäße Filter dadurch aus, dass das erste Feinstaubfilter ein Filter der Klasse F5 ist.

In einer möglichen, und im Rahmen der Erfindung in Betracht gezogenen Ausführungsform zeichnet sich das erfindungsgemäße Filter dadurch aus, dass das zweite Feinstaubfilter ein Filter der Klasse F6 ist.

In einer möglichen, und im Rahmen der Erfindung in Betracht gezogenen Ausführungsform zeichnet sich das erfindungsgemäße Filter dadurch aus, dass zwischen dem Feinstaubfilter und der austrittseitig angeordneten Begrenzungswand ein Freiraum vorgesehen ist.

Die Erfindung bezieht sich auch auf ein Fahrzeug mit den Merkmalen des Anspruches 15, wobei die eintrittseitige Begrenzungswand des Filters im Bereich einer beim Bewegen des Fahrzeuges auftretenden Luftströmung angeordnet ist.

In einer möglichen, und im Rahmen der Erfindung in Betracht gezogenen Ausführungsform zeichnet sich das erfindungsgemäße Fahrzeug dadurch aus, dass die eintrittseitige Begrenzungswand zur Längserstreckung des Fahrzeuges im Wesentlichen senkrecht ausgerichtet ist.

In einer möglichen, und im Rahmen der Erfindung in Betracht gezogenen Ausführungsform zeichnet sich das erfindungsgemäße Fahrzeug dadurch aus, dass das Filter mit seiner eintrittseitigen Begrenzungswand oberhalb der Fahrerkabine eines Fahrzeuges, insbesondere im Bereich oberhalb der Windschutzscheibe, angeordnet ist. Ebenso in Betracht gezogen sind im Rahmen der Erfindung Anordnungen des Filters seitlich neben oder unter der Fahrerkabine.

In einer möglichen, und im Rahmen der Erfindung in Betracht gezogenen Ausführungsform zeichnet sich das erfindungsgemäße Fahrzeug dadurch aus, dass das Filter bei Lastkraftwagen vom oberen Rand der Windschutzscheibe schräg nach oben ansteigend ausgerichtet angeordnet ist.

In einer möglichen, und im Rahmen der Erfindung in Betracht gezogenen Ausführungsform zeichnet sich das erfindungsgemäße Fahrzeug dadurch aus, dass die eintrittseitige Begrenzungswand zur Längserstreckung des Fahrzeuges schräg gestellt ausgerichtet ist.

Weitere Einzelheiten, Merkmale und Vorteile des erfindungsgemäßen Filters und dessen Verwendung an Fahrzeugen ergeben sich anhand der nachstehenden Beschreibung einer bevorzugten Ausführungsform.

Es zeigt:
Fig. 1 schematisch den grundsätzlichen Aufbau eines Filters an einem Beispiel,
Fig. 2 eine abgeänderte Ausführungsform,
Fig. 3 schematisch ein erstes Einbaubeispiel für ein erfindungsgemäßes Filter,
Fig. 4 schematisch ein weiteres Einbaubeispiel für erfindungsgemäße Filter und
Fig. 5 schematisch eine weitere Ausführungsform eines erfindungsgemäßen Filters.

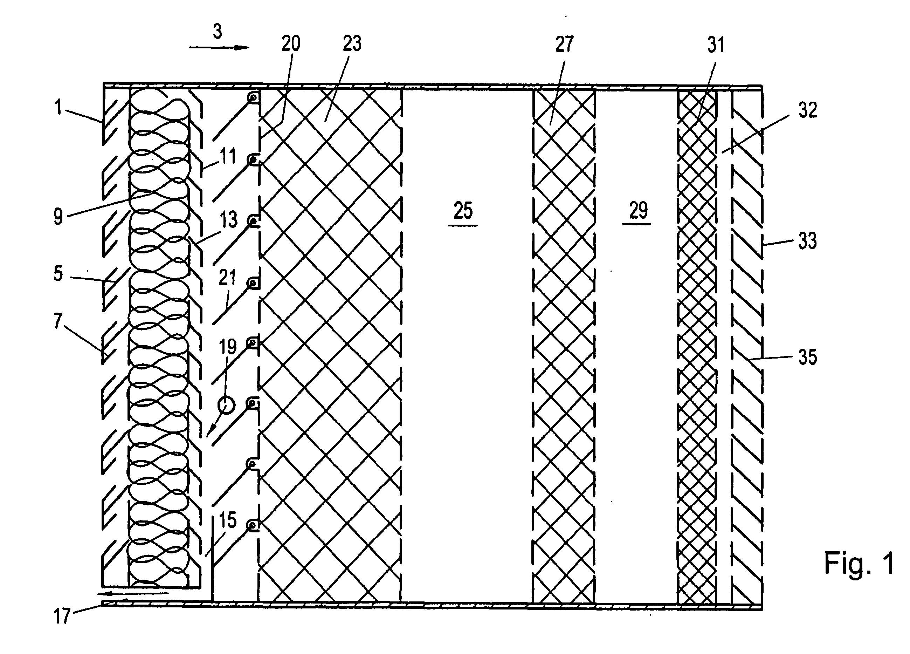

In der in Fig. 1 gezeigten Ausführungsform besitzt das erfindungsgemäße Filter den nachstehend beschriebenen Aufbau. Die einzelnen Teile des Filters werden in der Reihenfolge erwähnt und beschrieben, die der Durchströmrichtung von zu filternder Luft durch das Filter entspricht:

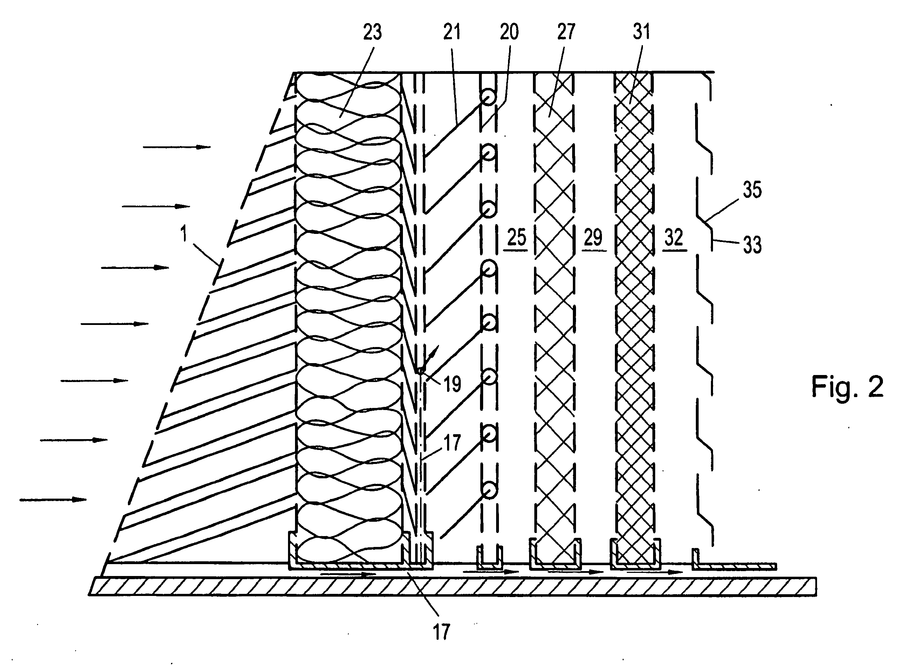

Eintrittseitig ist als die Endfläche bildende Wand ein Lochblech 1 oder ein Streckgitter, aus einem gegen aggressiven Regen, Salzwasser usw. resistenten Werkstoff vorgesehen. An der Innenseite des Lochbleches 1 sind in Strömrichtung der Luft (Pfeil 3) schräg nach oben weisende Leitflächen 5,7 vorgesehen. Dabei gibt es längere Leitflächen 5 und kürzere Leitflächen 7. Wenn das Filter oberhalb der Windschutzscheibe eines Fahrzeuges angeordnet ist, kann die vordere Begrenzungswand nach Art eines "Spoiler" schräggestellt sein wie dies in Fig. 2 dargestellt ist.

Die Leitflächen 5,7 leiten den Luftstrom in ein erstes Vorfilter 9. Das Vorfilter 9 besteht aus auswaschbarem Filterstoff, insbesondere einem Filterstoff aus Kunststoff oder Mineralstoff in Faserform. Dabei kann durch das eintrittseitige Lochblech 1 eintretendes Wasser dazu herangezogen werden, das Vorfilter 9 durch Auswaschen zu reinigen.

Die Leitflächen 5,7 an der Innenseite des Lochbleches 1 verbessern das Trocknen des Vorfilters 9, nachdem es ausgewaschen worden ist.

Im Anschluss an das Vorfilter 9 ist an dessen Innenseite ein weiteres Lochblech 11 mit Leitflächen 13 oder ein Streckgitter angeordnet, wobei die Leitflächen 13 in Strömungsrichtung (Pfeil 9) gesehen schräg nach unten verlaufend, also der Schrägstellung der Leitflächen 5 und 7 entgegengesetzt, ausgerichtet sind. Dadurch wird durch das Vorfilter 9 tretendes Wasser nach unten abgeleitet und tritt durch einen gewinkelten unteren Kanal 15 entlang des Bodens des Filtergehäuses am unteren Ende 17 aus der Filteranordnung nach vorne (Fig. 1) oder vorzugsweise hinten (Fig. 2) wieder aus. So ist gewährleistet, dass Wasser nicht zu im Anschluss an die Anordnung aus Lochblech 1, Vorfilter 9 und Lochblech 11 gebildeten Bestandteilen des erfindungsgemäßen Filters gelangen kann. Im Bereich des Kanals 15 ist ein Regensensor 19 (Feuchtigkeitssensor) vorgesehen, der Klappen 21, die nach dem zweiten Lochblech 11 angeordnet sind, steuert und sie schließt, wenn besonders viel Wasser durch das Vorfilter 9 tritt, z.B. beim Fahren durch eine Waschanlage. Diese Klappen 21 werden im Anlassfall motorisch geschlossen, sodass Wasser nicht weiter in das Innere des Filters eintreten kann.

Nach der Anordnung mit den Klappen 21 ist ein Grobstaubfilter 23 angeordnet. Das Grobstaubfilter 23 besteht aus demselben Werkstoff wie das erste Vorfilter 9, ist aber bevorzugt dichter (kleinere freie Durchtrittsquerschnittsfläche) ausgeführt als das Vorfilter 9.

Im Anschluss an das Grobstaubfilter 23 ist ein Freiraum 25 vorgesehen, in dem sich Staub, insbesondere Feinstaub, absetzen kann. Im Anschluss an den Freiraum 25 ist ein erstes Feinstaubfilter 27 vorgesehen. Dieses Feinstaubfilter 27 filtert Feinstaub mit einer Größenordnung von etwa 10µm aus der das Filter durchströmenden Luft. Als Feinstaubfilter 27 kann ein Filter (F5, DIN 779) verwendet werden, das einen Filterpack aus gefaltetem (plissiertem) Mikrofaserpapier mit Kunststoffabstandsfaden (Faltenpack) enthält. Beispielsweise geeignet ist ein Filter der Euro Filter GmbH (Dortmund, BRD) der Filterklasse EN 1822 und der Bauform/Type H13 oder H14.

Im Anschluss an das Feinstaubfilter 27 ist ein weiterer Freiraum 29 vorgesehen. Im Freiraum 25 und 29 ist nicht nur das Absetzen von (Fein)-Staubteilchen möglich, sondern die (Fein)-Staubteilchen werden getrocknet.

Im Anschluss an den zweiten Freiraum 29 ist ein weiteres Feinstaubfilter 31 zum Filtern von Feinstaubteilchen mit einer Größe von kleiner als etwa 1µm vorgesehen. Dieses Feinstaubfilter 31 kann ein Filter der Filterklasse F6 der Euro Filter GmbH (Dortmund, BRD) sein.

Die Filterlagen der Feinstaubfilter können zwischen Stützgittern angeordnet sein.

Nach dem Feinstaubfilter 31 ist ein weiterer Freiraum 32 vorgesehen.

Im Anschluss an den Freiraum 32 nach dem zweiten Feinstaubfilter 31 ist eine die hintere Endfläche bildende Wand angeordnet, die beispielsweise ein gelochtes Blech 33 ähnlich dem Lochblech 11 nach dem ersten Vorfilter 9 mit nach hinten unten schräg gestellten Leitflächen 35 ist, vorgesehen. Dadurch wird der Eintritt von Regenwasser von der Rückseite des Filters her verhindert.

Bei dem Lochblech 33 mit Leitflächen 35 sind die Leitflächen 35 größer ausgebildet und gegebenenfalls nach unten abgewinkelt, um ganz sicher zu stellen, dass kein Wasser von hinten in das Filter eintreten kann.

Die genannten Bestandteile (Lochblech 1, Vorfilter 9, Lochblech 11, Träger 20 für die Klappen 21, (Grobstaub)-Filter 23, (Feinstaub)-Filter 27, (Feinstaub)-Filter 31 und Lochblech 33 sind bevorzugt selbsttragende Bauteile ("Kassetten"), die in ein das Filter umgebendes Gehäuse eingesetzt werden können. So ist es möglich, einzelne Teile des Filters auszutauschen.

Das erfindungsgemäße Filter ist insbesondere dazu bestimmt, an Fahrzeugen an deren Vorderseite, insbesondere im Bereich oberhalb der Windschutzscheibe, angebracht zu werden. Das erfindungsgemäße Filter kann oberhalb der Fahrerkabine eines Fahrzeuges, insbesondere eines Lastkraftwagens, beispielsweise in eine dort vorgesehene Luftleitfläche ("Spoiler") integriert sein. Dabei können oberhalb der Eintrittsöffnung in das Filter zusätzlich Scheinwerfer oder Blinkleuchten angebracht sein.

Es besteht die Möglichkeit, die Eintrittsöffnung des Filters im Bereich oberhalb der vorderen Stoßdämpfer eines Fahrzeuges anzuordnen.

Dabei sind alle Stellen von Fahrzeugen, in denen Fahrtwind wirkt, denkbar.

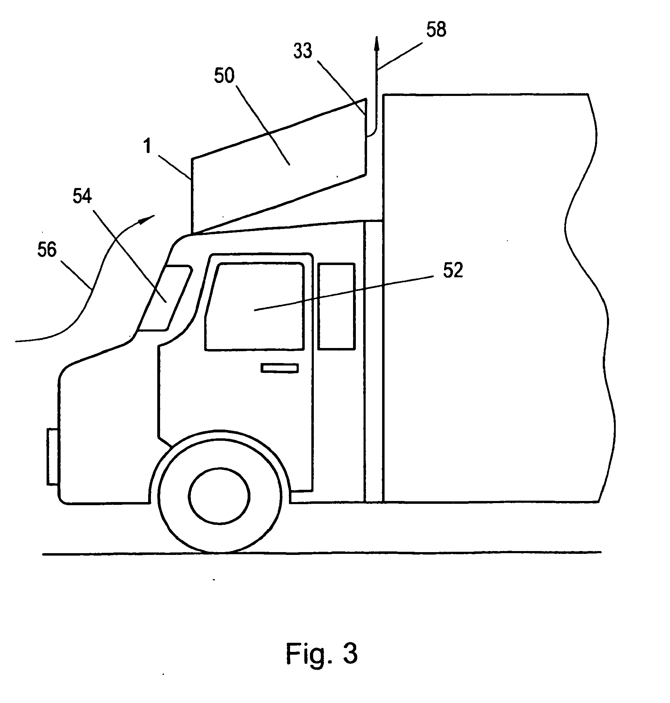

Ein Einbaubeispiel zeigt Fig. 3. In diesem Beispiel ist ein Filter 50 der Erfindung, das beispielsweise den anhand von Fig. 1 oder Fig. 2 beschriebenen Aufbau besitzt, oberhalb der Fahrerkabine 52, also oberhalb der Windschutzscheibe 54, angebracht, so dass Fahrtwind (Pfeil 56) über das Lochblech 1 in das Filter 50 eintritt und von Staub befreit durch das Lochblech 33 wieder aus dem Filter 50 austritt (Pfeil 58).

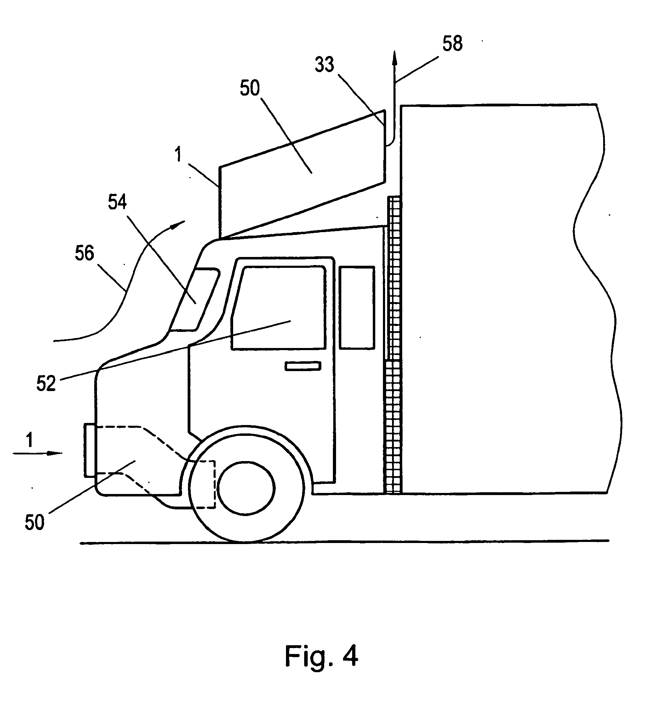

Das Einbaubeispiel von Fig. 4 zeigt wie ein erfindungsgemäßes Filter auch im Bereich der Unterseite eines Fahrzeuges so angeordnet sein kann, dass die eintrittseitige vordere Wand (Lochblech 1) im Bereich der vorderen Stoßstange angeordnet ist.

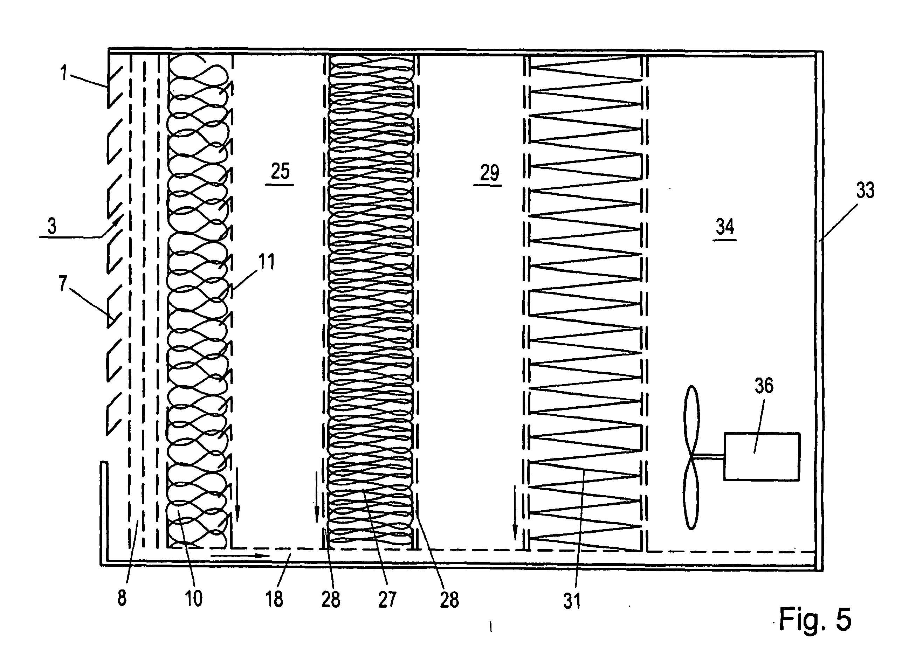

Die in Fig. 5 gezeigte Ausführungsform eines erfindungsgemäßen Filters besitzt den nachstehend beschriebenen Aufbau.

Eintrittseitig ist als eine Endfläche bildende Wand ein Lochblech 1 oder ein Streckgitter vorgesehen, das aus einem gegen aggressiven Regen, Salzwasser usw. resistenten Werkstoff besteht. An der Innenseite des Lochbleches 1 sind in Strömungsrichtung der Luft (Pfeile 3) schräg nach oben weisende Leitflächen 7 vorgesehen.

Wenn das Filter oberhalb der Windschutzscheibe eines Fahrzeuges angeordnet ist, kann die vordere Begrenzungswand nach Art eines Spoilers schräg gestellt sein, wie dies beispielsweise in Fig. 2 dargestellt ist.

Die Leitflächen 7 leiten den Luftstrom zu einer Lage aus Metallvlies, insbesondere Stahlvlies 8, wobei sich in dem Raum zwischen dem Lochblech 1 und der Lage 8 aus Stahlvlies ansammelndes Wasser nach unten zu einem in der unteren Begrenzungswand des Filters vorgesehenen Kanal 18 strömt. In den Kanal 18 eintretendes Wasser strömt zum bezogen auf die Fahrtrichtung hinteren Ende des Filters (nach rechts in Fig. 5).

Im Anschluss an die Lage 8 aus Stahlvlies ist eine Lage 10 vorgesehen, die als Grobstaubfilter dient, und aus einem wasserfesten Filtermaterial gebildet ist. Auch im Grobstaubfilter 10 anfallendes Wasser strömt nach unten in den Kanal 18.

Auf der bezogen auf die Strömungsrichtung (Pfeile 3) abgekehrten Seite (hintere Seite) der als Grobstaubfilter dienenden Lage 10 ist wieder ein Streckgitter 11 ähnlich dem Streckgitter 1 vorgesehen. Im Anschluss an das Streckgitter 11 ist ein Freiraum 25 vorgesehen, an den sich - immer bezogen auf die Strömungsrichtung - ein erstes Feinstaubfilter 27 anschließt, das zwischen Stützgittern 28 angeordnet ist, und ebenfalls aus wasserfestem Filtermaterial besteht. Nach dem Feinstaubfilter 27 ist ein weiterer Freiraum 29 vorgesehen, an den sich ein zweites Feinstaubfilter 31, das in einem Rahmen eingesetzt ist, anschließt.

Mit Abstand vom Feinstaubfilter 31 ist ein weiterer Freiraum 34 und danach eine Rückwand 33 in Form eines gelochtes Blechs, beispielsweise ähnlich dem Lochblech 11, oder in Form eines Stützgitters als die hintere Endfläche des Filters bildende Wand vorgesehen. In dem Raum 34 kann in einer Ausführungsform wenigstens ein motorgetriebenes Gebläse 36 vorgesehen sein, das den für die Wirksamkeit des Filters erforderlichen Luftstrom auch dann erzeugt, wenn das Fahrzeug, in dem das Filter eingebaut ist, steht oder nur langsam fährt.

Zusammenfassend kann ein Ausführungsbeispiel der Erfindung wie folgt beschrieben werden:

Ein Filter 50 das an Fahrzeugen im Bereich des Fahrtwindes angeordnet werden kann, besitzt ein einlaufseitiges Lochblech mit schräg gestellten Leitflächen 5, 7, ein Vorfilter 9, ein Grobstaubfilter 23, ein erstes Feinstaubfilter 27 mit Freiraum 25 zwischen dem Grobstaubfilter 23 und dem Feinstaubfilter 27, ein zweites Feinstaubfilter 31 mit Freiraum 29 zwischen den Feinstaubfiltern 27, 31 und luftaustrittsseitig ein weiteres Lochblech 33 mit schrägen Leitflächen 35. Mit diesem Filter ist beim Bewegen von Fahrzeugen, insbesondere von Kraftfahrzeugen, auf Straßen ein wirksames Filtern von Staub, insbesondere auch Feinstaub, aus der unter der Wirkung des Fahrtwindes durch das Filter 50 strömenden Luft gegeben.

## Patentansprüche

1. Filter (50) zum Entfernen von Staub, insbesondere Feinstaub aus Luft, mit einer eintrittseitig angeordneten, mit Öffnungen versehenen Begrenzungswand (1), einem Vorfilter (9), einer ersten Filterlage (23), einer zweiten Filterlage (27) mit wenigstens einem Freiraum (25,29) zwischen der ersten und der zweiten Filterlage (23, 27) und austrittseitig einer hinteren Begrenzungswand (33), **dadurch gekennzeichnet, dass** vor der ersten Filterlage (23) ein Träger (20) mit an ihm verschwenkbar montierten Klappen (21) angeordnet ist, dass im Anschluss an das Vorfilter (9) eine Wand (11) mit Löchern und Leitflächen (13), z.B. ein Lochblech, angeordnet ist, dass die Leitflächen (13) bezogen auf die Strömungsrichtung (Pfeil 3) von Luft durch das Filter (50) schräg nach unten weisend ausgerichtet sind, dass zwischen dem Träger (20) und der Wand (11) nach dem Vorfilter (9) ein Kanal (15) für das Ableiten von in das Filter (50) eingetretenem Wasser vorgesehen ist, dass dem Kanal (15) ein Feuchtigkeitssensor (19) zugeordnet ist, dass die Klappen (21) an dem Träger (20) wirkmäßig vom Feuchtigkeits sensor (19) derart gesteuert sind, dass die Klappen (21) geschlossen sind, wenn der Feuchtigkeitssensor (19) im Kanal (15) Feuchtigkeit feststellt.

2. Filter nach Anspruch 1, **dadurch gekennzeichnet, dass** die eintrittseitige Begrenzungswand, z.B. ein Lochblech (1), an ihrer dem Inneren des Filters (50) zugekehrten Seite schräg gestellte Leitflächen (5,7) trägt.

3. Filter nach Anspruch 2, **dadurch gekennzeichnet, dass** Leitflächen mit unterschiedlicher Länge, nämliche kürzere Leitflächen (7) und längere Leitflächen (5) vorgesehen sind.

4. Filter nach Anspruch 2 oder 3, **dadurch gekennzeichnet, dass** die Leitflächen (5,7) bezogen auf die Strömungsrichtung (Pfeil 3) von Luft durch das Filter (50) schräg nach oben ansteigend ausgerichtet sind.

5. Filter nach einem der Ansprüche 1 bis 4, **dadurch gekennzeichnet, dass** das Vorfilter (9) ein auswaschbarer organischer oder mineralischer Faserstoff ist.

6. Filter nach einem der Ansprüche 1 bis 5, **dadurch gekennzeichnet, dass** die, vorzugsweise im Anschluss an die Klappen (21) angeordnete Filterlage (23) ein Grobstaubfilter ist.

7. Filter nach einem der Ansprüche 1 bis 6, **dadurch gekennzeichnet, dass** nacheinander zwei Feinstaubfilter (27,31) vorgesehen sind.

8. Filter nach einem der Ansprüche 1 bis 7, **dadurch gekennzeichnet, dass** zwischen dem ersten Feinstaubfilter (27) und dem Grobstaubfilter (23) ein Freiraum (25) vorgesehen ist, und dass ein Freiraum (29), gegebenenfalls auch zwischen den Feinstaubfiltern (27, 31), vorgesehen ist.

9. Fahrzeug mit einem Filter (50) gemäß einem der Ansprüche 1 bis 8, **dadurch gekennzeichnet, dass** die eintrittseitige Begrenzungswand (1) des Filters (50) im Bereich einer beim Bewegen des Fahrzeuges auftretenden Luftströmung (56) angeordnet ist.

## Claims

1. Filter (50) for removing dust, especially fine dust, from air with a boundary wall (1) being provided with openings and that is located on the entry side, a preliminary filter (9), a first filter layer (23), a second filter layer (27), with at least one free space (25, 29) between the first and the second filter layer (23, 27) and on the exit side, a rear boundary wall (33), **characterized in that** in front of the first filter layer (23) a carrier (20) is provided with flaps (21) that are pivotally mounted on it, that downstream from the preliminary filter (9) a wall (11) with holes and guide surfaces (13), e.g. a perforated plate, is provided that the guide surfaces (13) relative to the direction (arrow 3) of air flow through the filter (50) are aligned pointing obliquely downward, that between the carrier (20) and the wall (11) downstream of the preliminary filter (9) a channel (15) is provided for draining water that has entered the filter (50), that a humidity sensor (19) is coordinated to channel (15), that the flaps (21) on the carrier (20) are controlled in their action by the humidity sensor (19) such that the flaps (21) are closed when the humidity sensor (19) detects humidity in channel (15).

2. Filter according to Claim 1, **characterized in that** the boundary wall that is located on the entry-side, e.g., a perforated plate (1), on its side facing the interior of the filter (50), bears slanted guide surfaces (5, 7).

3. Filter according to Claim 2, **characterized in that** guide surfaces with different lengths, namely shorter guide surfaces (7) and longer guide surfaces (5) are provided.

4. Filter according to Claim 2 or 3, **characterized in that** the guide surfaces (5, 7) are aligned rising obliquely upward relative to the direction of flow (arrow 3) of air through the filter (50).

5. Filter according to one of Claims 1 to 4, **characterized in that** the preliminary filter (9) is a washable organic or mineral fiber material.

6. Filter according to one of Claims 1 to 5, **characterized in that** filter layer (23) that is located preferably following the flaps (21) is a coarse dust filter.

7. Filter according to one of Claims 1 to 6, **characterized in that** there are two fine dust filters (27, 31 ) in succession.

8. Filter according to one of Claims 1 to 7, **characterized in that** there is a free space (25) between the first fine dust filter (27) and the coarse dust filter (23) and that a free space (29) is optionally also between the fine dust filters (27, 31).

9. Vehicle with a filter (50) according to one of Claims 1 to 8, **characterized in that** the entry-side boundary wall (1) of the filter (50) is located in the region of air flow (56) that forms when the vehicle is moving.

## Revendications

1. Filtre (50) pour éliminer la poussière, notamment de la poussière à granulométrie fine dans l'air, avec une paroi de délimitation (1) disposée côté entrée, munie d'ouvertures, un pré-filtre (9), une première couche filtrante (23), une deuxième couche de filtration (27) avec au moins un espace libre (25, 29) entre la première et la deuxième couche filtrante (23, 27) et côté sortie une paroi de délimitation (33) arrière, **caractérisé en ce qu'**en amont de la première couche filtrante (23) est disposé un support (20) avec des clapets (21) montés de façon pivotante sur ce dernier, **en ce qu'**à la suite du pré-filtre (9) est disposée une paroi (11) avec des perforations et des surfaces stabilisatrices (13), par ex. une tôle perforée, **en ce que** les surfaces stabilisatrices (13) par rapport au sens d'écoulement (flèche 3) d'air à travers le filtre (50) sont orientées en inclinaison vers le bas, **en ce qu'**entre le support (20) et la paroi (11), en aval du pré-filtre (9) est prévu un canal (15) pour l'évacuation d'eau ayant pénétré dans le filtre (50), **en ce qu'**au canal (15) est associé un capteur d'humidité (19), **en ce que** les clapets (21) sur le support (20) sont commandés au niveau de leur action par le capteur d'humidité (19) de telle sorte que les clapets (21) soient fermés, lorsque le capteur d'humidité (19) constate de l'humidité dans le canal (15).

2. Filtre selon la revendication 1, **caractérisé en ce que** la paroi de délimitation côté entrée, par ex. une tôle perforée (1) porte sur sa face tournée vers l'intérieur du filtre (50) des surfaces stabilisatrices (5,7).

3. Filtre selon la revendication 2, **caractérisé en ce que** des surfaces conductrices de longueur différente, à savoir des surfaces conductrices plus courtes (7) et des surfaces conductrices plus longues (5) sont prévues.

4. Filtre selon la revendication 2 ou 3, **caractérisé en ce que** les surfaces conductrices (5,7) sont orientées en inclinaison croissante vers le haut, par rapport au sens d'écoulement (flèche 3) d'air à travers le filtre (50).

5. Filtre selon l'une quelconque des revendications 1 à 4, **caractérisé en ce que** le pré-filtre (9) est une matière fibreuse minérale ou organique lavable.

6. Filtre selon l'une quelconque des revendications 1 à 5, **caractérisé en ce que** la couche filtrante (23) disposée de préférence en raccordement au clapet (21) est un filtre à poussière de forte granulométrie.

7. Filtre selon l'une quelconque des revendications 1 à 6, **caractérisé en ce que** deux filtres à poussière de fine granulométrie (27, 31) sont prévus successivement.

8. Filtre selon l'une quelconque des revendications 1 à 7, **caractérisé en ce qu'**entre le premier filtre à poussière de fine granulométrie (27) et le filtre à poussière de forte granulométrie (23) est prévu un espace libre (25) et **en ce qu'**un espace (29) est prévu le cas échéant également entre les filtres à poussière de fine granulométrie (27, 31).

9. Véhicule avec un filtre (50) selon l'une quelconque des revendications 1 à 8, **caractérisé en ce que** la paroi de délimitation (1) côté entrée du filtre (50) est placée dans la zone d'un courant d'air (56) naissant au déplacement du véhicule.
